# EUROPEAN PATENT APPLICATION

(11) **EP 3 816 884 A1**
(43) Date of publication of application: **05.05.2021**
(21) Application number: 19382935.5
(22) Date of filing: 28.10.2019
(51) Int. Cl.: G06Q 10/02, G06Q 10/06, G06Q 50/30

(54) **AIRCRAFT PARKING STAND ASSIGNMENT PREDICTION**

(71) Applicant: The Boeing Company, Chicago, IL 60606-2016 (US)
(72) Inventor: Costas, Pablo, 28042 MADRID (ES); Peña Ortiz, Nicolas, 28042 MADRID (ES); Lopez Leonés, Javier, 28042 MADRID (ES); Frontera, Guillermo, 28042 MADRID (ES); Güemes, Alejandro, 28042 MADRID (ES)
(74) Representative: ZBM Patents - Zea, Barlocci & Markvardsen

(57) **Abstract**

A parking stand prediction system uses statistical analysis and historical data to provide an available parking stand for an aircraft at an arrival airport. The system receives real-time surveillance data relating to airlines, on-air flights, and airline and airport ground services. The surveillance data is sorted or pre-filtered according to airport. The system also receives airport map or layout data. Parking stand identification logic is applied to the surveillance data, airport map data, and historical surveillance data. Portions of this data are stored in a parking stand database which is continuously updated with current surveillance and parking stand availability data. A user inputs parking stand search parameter data into the system and receives a parking stand prediction for the aircraft of interest at an arrival airport.

## Description

### BACKGROUND

In the airline industry today, pilots, dispatchers, and airport and airline ground service personnel and others often do not know which parking stand to park an aircraft upon arriving at an airport. They simply do not always know which parking stands suitable for a specific aircraft model are available. Sometimes predictions can be made as to which stands will be available, but these are not always reliable, particularly with busy, congested airports. Not knowing which parking stand an aircraft can park at an arrival airport makes it difficult to accurately estimate a taxi-in time prediction at that airport, that is, the time from the runway to a particular parking stand.

One consequence of this is that accurate fuel loading of the aircraft at the airport of origin is challenging. Pilots often over estimate taxi fuel based on fixed values provided by flight planning tools or their own experience. Often parking stand-runway information or current congestion status at the arrival airport is not fully utilized. If an airline knew with a higher degree of certainty the parking stand at the arrival airport, the airline could load a more accurate amount of fuel needed for taxiing to that stand. Less fuel would be wasted taxiing and waiting (idling) at the arrival airport, leading, in the long term, to measurable savings in fuel costs resulting from improved trip fuel calculations.

Another factor being looked at by airlines is ways to spend less time on the ground at an airport through decreasing taxiing and idling. Another is preparing airline and airport resources, equipment, personnel, in-flight provisions, and the like more efficiently.

Unreliable and inaccurate parking stand assignment prediction at an arrival airport can lead to increased aircraft fuel consumption, inefficient airline fleet and ground services, and reduce airport capacity.

### SUMMARY

Disclosed are methods and systems of predicting parking stands for parking aircraft at arrival airports. In some examples, real-time surveillance data relating to airlines, aircraft, and airports, relating to in flight and ground service activity, is received at a service platform. The surveillance data is sorted or decoded based on airports. The service platform receives airport map or layout data from a third source. Once the surveillance data is sorted, parking stand identification logic is applied to the sorted surveillance data and the airport map data. Upon applying parking stand identification logic to the data, a parking stand database is updated and maintained. The service receives parking stand prediction or search parameter input from a user. The service predicts which parking stand the aircraft should attempt to park at upon arriving at the airport.

In some examples, a system for predicting aircraft parking stand availability comprises a geographical pre-filtering module for processing airline, aircraft, and airport surveillance data. Another module of the system is a parking stand identification module, which creates airport-specific parking stand data. A parking stand database is also updated at this time if needed. A parking stand prediction module predicts a parking stand where the aircraft can park upon arrival at the airport.

Non-transitory computer-readable media embodies program code or executable computer instructions for implementing the methods, tools, platforms, processes, routines, and sub-routines described herein. The program code to be executed, for example, implements methods for predicting an available parking stand for an aircraft arriving at a destination airport and methods for displaying the predicted parking stand data to a user.

### BRIEF DESCRIPTION OF THE DRAWINGS

FIG. 1 is a process flowchart corresponding to a process of calculating parking stand availability predictions at an airport, in accordance with some examples.
FIG. 2 is a process flowchart corresponding to a process of creating a graphic display, showing predicted parking stands and parking aprons, in accordance with some examples.
FIG. 3 is a block diagram of a system showing components, databases, and modules for implementing a parking stand prediction service, in accordance with some examples.
FIG. 4 is a block diagram showing fields of a record stored in a parking stand database, in accordance with some examples.
FIG. 5 is an example of a portion of a graphical user interface showing predicted parking stand and apron data to a user.
FIG. 6 is a block diagram of a data processing system, in accordance with some examples.

### DETAILED DESCRIPTION

In the following description, numerous specific details are set forth in order to provide a thorough understanding of the presented concepts. In some examples, the presented concepts are practiced without some of these specific details. In other instances, well known process operations have not been described in detail so as to not unnecessarily obscure the described concepts. To the extent that terms "includes," "including," "has," "contains," and variants thereof are used herein, such terms are intended to be inclusive in a manner similar to the term "comprises" as an open transition word without precluding any additional or other elements. While some concepts will be described in conjunction with the specific examples, it shall be understood that these examples are not intended to be limiting. It is intended to cover alternatives, modifications, and equivalents as may be included within the spirit and scope of the described examples as defined by the appended claims.

Methods and systems for predicting parking stand availability are described in the figures. Parking stand availability prediction provides pilots and airline ground services with an accurate estimation of the parking stand (an area in the airport where an aircraft is parked) enabling pilots to estimate the fuel needed for taxiing and idling, and for ground resources to manage airline resources. In some examples, the prediction module is also used by a computing device, such as a laptop computer, program, or other tool to estimate fuel requirements. The fuel requirements are presented to the pilot and/or ground personnel. The prediction is derived in real time and the service is utilized at the time the aircraft is preparing for departure or while the aircraft is in flight. The prediction is based in part on the flight plan data and historical information as described below.

In some examples, historical ground surveillance and flight plan feeds, grouped or sorted by, for example, airline, airport of origin, aircraft model, day of week, and time of day among other data, are examined and statistically processed to find an available parking stand at the arrival airport. Known ground service and flight plan feeds include Automatic Dependent Surveillance Broadcast (ADS-B) and Airport Surface Detection Equipment Model X (ASDE-X). The increasing use of such feed technologies enables real-time tracking of aircraft (across airlines) around the world and observation of ground service operations at some airports (participating in ADS-B, ASDE-X, and other feeds). This ability to track airport situations in real time includes identifying parking stands that are in use at a given time. This data leads to a service that provides an accurate parking stand assignment prediction for an incoming flight.

In some examples, to train and build a prediction model and train a temporal series, dynamic effects associated with potential events that are happening at the airport that could have an influence in the output of the model are considered.

Parking stand prediction systems and methods can be integrated with, for example, an Electronic Flight Bag (EFB), flight planning systems, or with fast-time simulation engines. Parking stand assignments are updated when the integration device (that is, the EFB, flight planning system or simulation engine) is in communication with a network where the relevant back-end servers operate.

As noted above, another factor being looked at by airlines is ways to spend less time on the ground at an airport through decreasing taxiing and idling, as well as preparing airline and airport resources, equipment, personnel, and in-flight provisions more efficiently. Airlines would like to have many of these ground services ready at the arrival parking stand and could do so if they knew with a higher degree of certainty that the aircraft will be parking at that parking stand. There are also several advantages with respect to airline fleet management, such as ensuring that passengers make connecting flights.

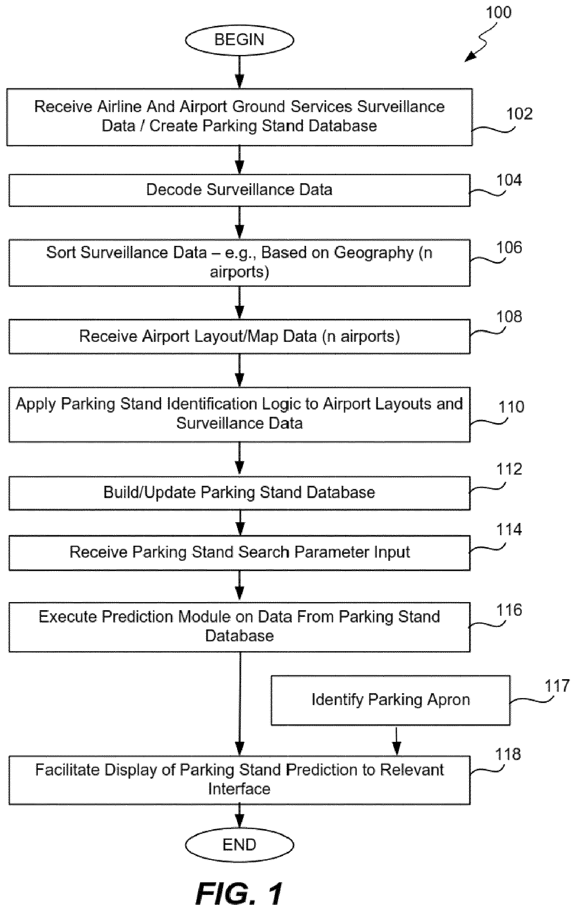

FIG. 1 is a process flowchart corresponding to method 100 of calculating parking stand availability predictions at an airport, in accordance with some examples. As described, a parking stand prediction service is used any time before landing at an arrival airport. For example, the parking stand prediction service is used prior to loading fuel at an airport of origin. In another example, the parking stand prediction service is used by a pilot after take-off to update flight route, speed, or other parameters. At step 102, a parking stand prediction service continually receives various types of surveillance data 302. A portion of this surveillance data 302 is real-time aircraft tracking data from around the world. That is, data tracking nearly all commercial flights worldwide. Surveillance data 302 is gathered from ground sensors, radar, other aircraft, and various sources at an airport. These sources provide a detailed perspective of how aircraft are operating at airports around the world. Inferences can be drawn from this data and predictive models can be built for predicting parking stand availability. Another portion of the data is airline and airport ground services tracking data from all or nearly all airports in the world. In some examples, ground services data from airlines or airports include information relating to parking stands generally and which ones are occupied at a specific time and also include data on which parking stand aircraft are presently parked at the airports. The ground services information includes service availability, such as de-icing, wireless connectivity, and the like. The gate prediction service receives these data through various means, the primary one being data feeds from established sources, such as ADS-B and ASDE-X, described above.

At step 104, surveillance data 302, which is typically in the form of raw data being streamed or transmitted from thousands of airports and aircrafts, is decoded so that the data can be analyzed, processed, and sorted. In addition to surveillance data 302 obtained at step 102, various historical data of the same type is provided in some examples. One example is previous aircraft and airport and airline ground service tracking data, decoded at step 104. In some examples, this historical data, with respect to ground services, includes which parking stands have been occupied at various days and times in the past.

At step 106, surveillance data 302, which is previously decoded in some examples, is sorted or pre-filtered based on multiple specific geographic locations. In this context, a geographic location is interpreted as an airport. A data item of data in the continually-streaming and decoded surveillance data 302 belongs to or is associated with one or more airports. At this step, the surveillance data is filtered or sorted to n airports (where n can be most any natural number). As such, at this stage, each data item in the surveillance data is identified with at least one airport, e.g., sorting the data into airport buckets or containers. Because each airport (e.g., geographic location) has its own data container and is individually handled and examined independent of other airports, the parking stand prediction service can be scaled or grown easily. It is not difficult to add new airports or to update or modify information on existing airports.

At step 108, the parking stand prediction service receives airport layout data 304 or airport maps for n airports or all airports in the parking stand prediction service. In some examples, airport layout data 304 is be sourced from a navigation database (e.g., a Jeppesen navigation database), including Airport Map Database (AMDB). These airport map data include the position of all the possible parking stands available in those airports. Additionally, they can contain information on the aircraft category that can be parked or services available in those parking stand areas (e.g., de-icing, wireless connectivity, etc.).

At step 110, the service applies parking stand identification logic to the airport layouts. The result of continually applying this identification logic to airport layouts is creation and maintenance of a parking stand database. In some examples, the identification logic involves evaluating the aircraft speed continuously and when the speed is below a threshold (e.g., the aircraft is taxiing on the ground) and next to a parking position area. At this point the aircraft is labeled as being located in that parking stand area. In some examples, this condition is tuned to avoid false positives.

This database is the main database used by the service and covers or encompasses all n airports. The database is continually updated and maintained with current airport and aircraft data when new information is received from step 110 (new flights arriving or departing from one of the n airports) or when new updates are available in the AMDB (Aerodrome Mapping Database), typically following AIRAC (Aeronautical Information Regulation And Control) cycle. For example, the database are manually updated by any authorized employee or users, or updated, for example, via a feedback loop using user input. In some examples, the prediction uses artificial intelligence or machine learning.

In some examples, the parking stand database is of any type that is suitable for the specific implementation of a parking stand prediction system. For example, a relational database is used, and the parking stand data is provided in the form of records. A parking stand database record has several fields, some of which have data that is entered by a user to perform a parking stand prediction query and other fields have data that is the output of the parking stand prediction operations performed in a prediction module, described below. As noted, in some examples, a record has fields that are populated with search criteria entered by a user (e.g., a pilot, dispatcher, fleet manager, and the like). These will likely include fields with illustrative names such as Airport of Arrival, Airport of Departure, Airline, Type of Aircraft, Day of Week, Time of Day and others, such as Weather, Incidents, and so on. The user has a limited set of information, such as airports, airline, and day of week. This can still be used to create a parking stand prediction, but the more information that can be entered by the user, the more accurate the prediction will be, as explained below in the prediction module (e.g., parking stand prediction system 300).

As noted, a parking stand database record also includes fields that include actual parking stand prediction data. In addition to a parking stand prediction, in some examples, the parking stand database record also includes an apron prediction (an apron being a section or segment of parking stands grouped together at an airport). One option is that the service is not be able to make a parking stand prediction based on the information entered by the user, in which case these two fields (parking stand prediction and apron prediction) and any others associated with the prediction itself will be empty. A graphical interface, which is seen by a user to enter the search criteria by the user, takes any suitable form and provides a user experience as designed by the entity utilizing the parking stand prediction service, typically an airline. For example, the graphical interface is presented to a user in the cockpit as a new feature in an avionics system or other software tool. In some examples, the graphical interface is presented via a computing device (e.g., tablet, PC, laptop, etc.) to ground personnel. Similarly, how the prediction data is displayed to the user also varies widely and depends on the type of interface the service is being used with, for example, a pilot application, a flight planning tool, a dispatching application, a fast time simulator or engine, and the like. As noted, this is one example of how the parking stand database stores relevant data. Specific implementation of the service and integration of external tools varies depending on the needs of the entity using the service or tool. Fields in the parking stand database are continuously updated. For example, when an aircraft is eventually parked at a specific parking stand, the record for that aircraft is updated to show that the aircraft is parked there and that the parking stand is now occupied. In some examples, the predicated parking stand field remains the same or is also updated to null or other value indicating that the aircraft has now been parked.

At step 114, the service receives parking stand search parameter input 303 from a user, such as origin/destination airport, airline, aircraft type, and other parameters. The amount of information entered by the user varies depending on who the user is, what information is available, the user interface implemented by the airline, and other factors.

At step 116, one or more parking stands for parking the aircraft at the airport is predicted. More specifically, the service executes a parking stand prediction module (e.g., via parking stand prediction identification logic module 310) using some of the data in the parking stand database. The user has already entered the search criteria at step 114 which can vary from a minimally needed set of parameters (e.g., Airport of Arrival and/or Airline) to a full set of data, for example, everything a pilot or dispatcher knows at the time of departure that is relevant to parking stand prediction at the arrival airport. In some examples, the prediction module also uses airport layout data 304, surveillance data 304, historical data, all or most of which resides, *a priori,* in the parking stand database.

As described above, in some examples, a histogram is created as a tool to interpret historical and real-time surveillance data and airport layout data 304. For example, the histogram counts the number of occurrences of a particular flight, as defined by airport origin/destination, airline, aircraft type and the like, has parked at a particular parking stand in the past. In this example, an occurrence is a time that a parking stand was used or occupied by that flight, as defined by the user input parameters, in previous arrivals to the arrival or destination airport, in other words, the airport of interest. A flight on a Boeing 747 operated by Emirates Airlines from New York JFK to Dubai International Airport has flown the route 64 times, as recorded or indicated by the parking stand database. Of these 64 times this flight has flown from JFK to Dubai International, 37 of the times the flight parked at parking stand T1. The flight parked at parking stand T2 20 times and 7 times - at parking stand T3. Thus, T1 has 37 occurrences, T2 has 20 occurrences, and T3 has 7 occurrences based on data in the parking stand database. The prediction module creates a histogram reflecting these "occurrence" counts. The prediction module uses this histogram to predict that the flight of interest will most likely be able to park at parking stand T1 because T1 has the highest number of occurrences as can be derived from the histogram. However, in some examples, the highest-occurrence result of T1 is cross-referenced or cross-checked with the probability that another flight is occupying parking stand T1 at the same time that the flight of interest is arriving at the destination airport. The parking stand prediction system has access to the surveillance data and, therefore, is able to determine or calculate if there is a higher probability that parking stand T1 will be occupied by another flight at the same time. If this is statistically predicted, then the parking stand with the second-highest occurrence, T2, will be the predicted parking stand for the flight of interest. The predicted parking stand will switch to parking stand T2.

At step 118, the service outputs the parking stand prediction data and provides this data to the relevant interface, such as, but not limited to, a Representational State Transfer (REST) service interface, or displays this data on a computing device executing the parking stand prediction system software as a stand-alone application. For example, the manner for displaying the data is visual. In some examples, a map of the parking stands at the arrival airport is displayed with a visual indicator at each gate of the likelihood of that particular parking stand being available when the flight lands at the arrival airport. One way to describe this type of visual display is as a "heat map" of the parking stands and their likelihood of availability.

At step 117, a parking stand apron is identified. As such, the prediction data, such as the apron prediction and parking stands prediction, is derived and provided to the user immediately; the prediction module accepts the input, executes, and provides the prediction data in real time.

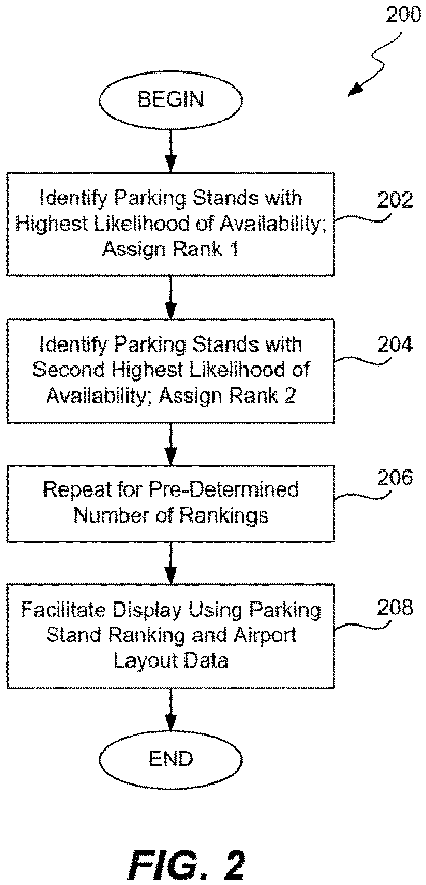

With respect to creating and presenting a visual display of the parking stands and their likelihood of being available for the aircraft to park when the aircraft arrives, FIG. 2 is a flow diagram of a process of deriving data needed for creating one example of visual display. Output from a prediction module of parking stand predictions can have various formats. For example, the output provides one predicted parking stand and one predicted apron, even if there are multiple parking stands in different aprons which all happen to have the same or close likelihoods of being available at the time of the aircraft's arrival at the airport. In some examples, the module uses a tie-breaking criteria of its own to select the one to show the user. Alternatively, the prediction module derives a more elaborate output. For example, the prediction module groups all the parking stands that have the same or nearly same likelihood of being available into one tier and use these tiers to assign rankings and create a detailed visual display, such as a heat map.

FIG. 2 is a flow diagram of a process of steps towards creating such a display. At step 202 the prediction module (e.g., parking stand identification logic module 310) identifies a first group of parking stands, which comprises one or more parking stands having the highest likelihood of being free at the arrival time. All stands in this group are assigned a ranking of 1 or other label, indicating that they are the most likely to be available. At step 204 the prediction module identifies a second group of parking stands, which are second most likely to be available at time of landing. A ranking of 2 is assigned to this group. With this step the prediction module is performing a more complex analysis because the prediction module is determining more than one parking stand that is most likely to be available, but others that are less likely to be available. At step 206, the prediction module repeats the operation of step 204 as many times as the service is programmed to by the entity using the service. For each iteration of parking stand prediction, a ranking (or something similar) is assigned to that tier.

At step 208, a visual display is facilitates. In other words, the service creates a visual display using the airport apron and parking stand layout data and the parking stand rankings derived in the previous steps. The visual presentation and user experience takes several forms. In some examples, as noted above, the visual presentation and user experience is in the form of a heat map. Specifically, all parking stands that have a ranking of 1 are in red, those with a ranking of 2 are in orange, and those with a ranking of 3 are in blue, and so on. Such a visual display gives the user a means of quickly ascertaining, for example, which apron in the airport to taxi to upon arrival. Or the user is able to easily evaluate whether there will be an available parking stand at the airport when the aircraft lands.

In some examples, a prediction module uses a statistical approach for predicting parking stand availability based on correlation of historical data and flight information. As noted above, the input to the module includes search parameter data entered by the user (e.g., a dispatcher or pilot) and can vary, although there is a minimum parameter number needed to calculate a reliable parking stand prediction. The output is parking stand availability prediction information at the arrival airport. In some examples, the parking stand database is, in turn, updated with this output or portions of this output data. The statistical approach is based on data in the parking stand database. For example, the values in the parking stand database are used to create a histogram of which parking stands have been used by the flight in the past. This data is, in turn, used to create a distribution of occurrences. The mean value or, in some examples, the maximum value of the distribution, is interpreted as parking stand that will most likely be used by this flight. In this manner, the prediction module examines the distribution of historical data.

The prediction module examines data in the parking stand database, including flight information. The prediction module focuses on data relating to flights that have the same or equivalent parameters as those entered by the user. For example, the prediction module looks for flights that are arriving at the same arrival airport, on the same day of the week and at around the same time of day, and is the same or similar aircraft model. In some examples, the prediction module also examines ground services information, such as which parking stands are occupied at the airport at that time, and also examine historical data relating to what day and time parking stands have been occupied in the past. By processing all these data and using statistical analysis, the prediction module is able to determine which parking stand or stands will most likely be available.

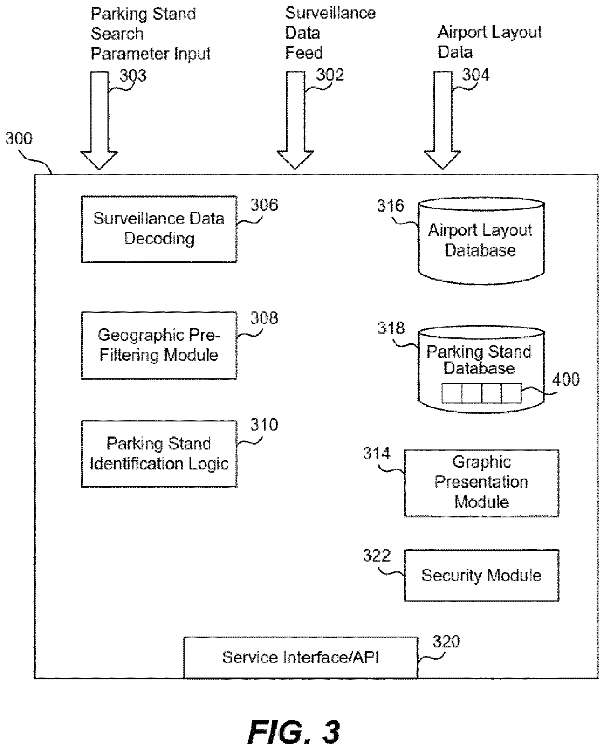

FIG. 3 is a block diagram showing components and modules for implementing a parking stand prediction service. In some examples, the illustrated components and modules reside on a single computing device or on multiple, distributed computing devices. Some examples include a native application, software as a service (SaaS), or software as a platform implementation, such as a cloud-based service or as a Web service or application. As noted above, in some examples, the illustrated components and modules are integrated or embedded as an additional feature in one or more pilot or airline-specific tools, bags, software, and the like. However, regardless of implementation and manner in which prediction values are presented to the user, the prediction output is created immediately upon the user entering the search parameters; the pilot or dispatcher gets a parking stand prediction right away.

In some examples, parking stand prediction system 300 has at least two external data inputs. Other input includes a wide array of data, such as real-time weather and weather forecasting data, emergency data, and any relevant data from other sources, such as web servers. Surveillance data 302 includes real-time airline, aircraft, and airport data (or subsets of these) from third-party sources such as ADS-B and ASDE-X as described above. For example, world-wide real-time tracking data of aircraft and airport ground services is used. In some examples, the data is in the form of a data feed or any other manner or medium that is operable with parking stand prediction system 300. The other external data source is airport layout or map data, such as sourced from a Jeppesen navigation database that provides information on where aircraft are parked at airports around the world. Data feed 304 provides up-to-date information on airport maps around the world.

Parking stand prediction system 300 contains several software modules and databases for implementing parking stand prediction as described in the flow diagrams above. A surveillance data decoding module 306 decodes the raw real-time surveillance data received by parking stand prediction system 300 so that the data can be processed, sorted, and the like by parking stand prediction system 300. Decoding surveillance data involves taking a signal from a provider (e.g. ADS-B) and assigning to an airport. A surveillance data point is assigned to an airport. For example, the world is divided into quadrants and surveillance data decoding module 306 assigns a surveillance data point to one region in which the data point is located. If the quadrant has only one airport, then the decoding process starts and the surveillance data point is assigned to a queue for that airport. If the region or quadrant contains multiple airports, the region is again divided into four regions and the surveillance point is assigned to one of them. This process continues recursively until the process ends for that surveillance point and starts with the next. This process is performed directly over surveillance data 302 that parking stand prediction system 300 continuously receives. Surveillance data points with an altitude over a certain threshold is not considered given that they most likely belong to flight phases that are not relevant to parking stand prediction system 300.

Geographic pre-filtering module 308 sorts or pre-filters the decoded surveillance data into n airports worldwide. Parking stand identification logic module 310 processes the pre-filtered surveillance data for each airport. In some examples, parking stand identification logic module 310 uses data from an airport layout or map database 316, which stores airport map data from data feed 304.

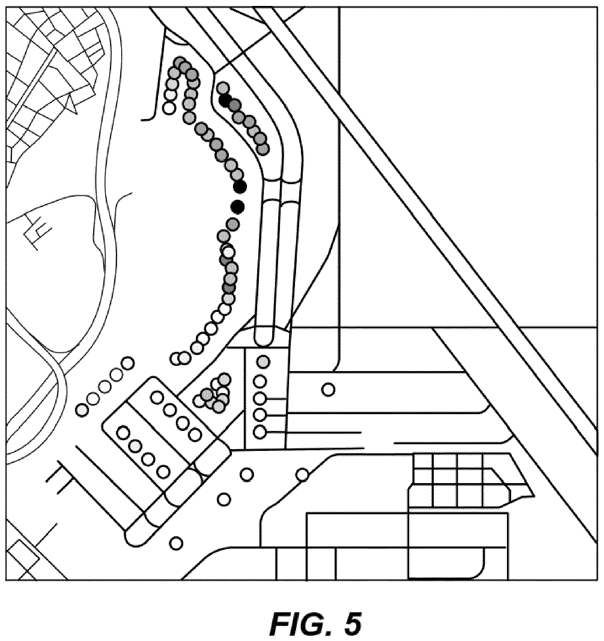

Parking stand identification logic module 310 creates a parking stand database 318. Parking stand identification logic module 310 executes a statistical method based on correlation of historical data and aircraft flight information. As described above, parking stand database 318 contains search parameters inputted by the user such as airport of arrival, airline, aircraft type, and other data. Because of the importance of ensuring authenticity of users and security of transmissions, a security module 322 performs various authentication and security functions relating to authenticating users and their requests. More generally, output from parking stand prediction system 300 is transferred over secure networks to other components, modules, and users. Output from parking stand prediction system 300 also has fields for storing the predicted available parking stand or stands and also stores one or more aprons. In some examples, graphical presentation module 314 is used for executing software and displaying parking stand prediction results to a user. For example, graphical presentation module 314 generates a visual display similar to a heat map where each parking stand at an airport is represented by a dot or small circle, each one having a color indicating likelihood of availability upon arrival. For example, FIG. 5 is an example of a visual display that facilitates quick evaluation of parking stand availability. Such a display enhances the user experience. A screenshot in FIG. 5 shows an airport layout with multiple parking stands and parking stand aprons. Each parking stand is represented by a dot that is of one of three or more groups, each group representing a likelihood of availability (illustrated by shading of the dots or the color of the dots). Other graphic representations are also be created that show parking stand availability to the user in an efficient manner.

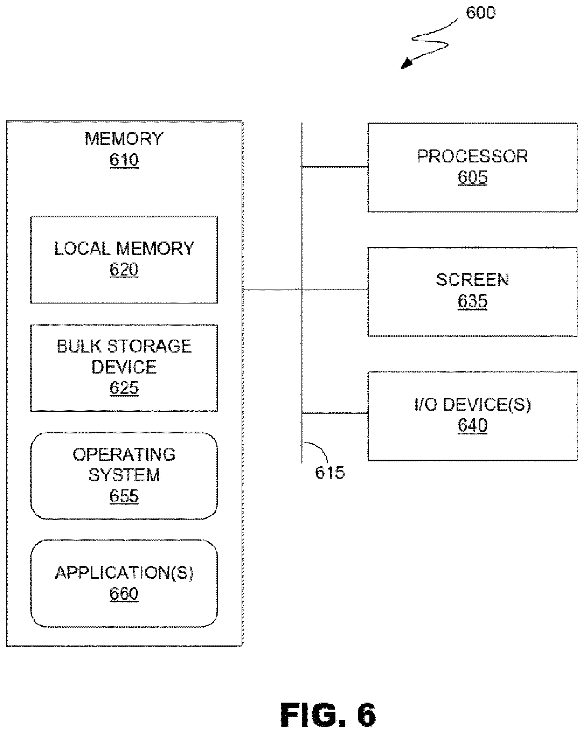

It is noted that, in some examples, the airport layout database 216 and parking stand database 318 comprise volatile memory or nonvolatile memory, or can comprise both volatile and nonvolatile memory. Examples of suitable types of volatile and non-volatile memory are described below with reference to FIG. 6. The memory (e.g., data stores, databases) of the subject systems and methods is intended to comprise, without being limited to, these and any other suitable types of memory. As an example, airport layout database 216 and parking stand database 318 (and/or other data stores disclosed herein) can utilize suitable data compression techniques to efficiently store media content.

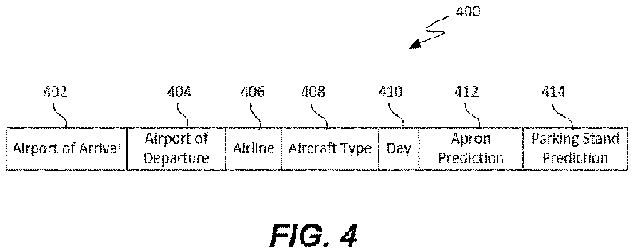

FIG. 4 is a block diagram of record 400 stored in parking stand database 318. Parking stand database 318 includes several fields some of which are described above. An airport of Arrival field 402 stores a code indicating which airport the aircraft will be arriving. Similarly Airport of Departure field 404 stores the departure airport for the subject flight. Also included are Airline field 406, Aircraft Type field 408, and Day field 410 indicating the weekday when the aircraft is arriving. The prediction fields are apron prediction field 412 and parking stand prediction field 414. In other examples, there are additional fields that are relevant or useful for predicting parking stands. For example, other fields and those described here are useful for determining available parking spots, spaces, or stands for autonomous vehicles, such as shuttles, buses, cars, or various micro-mobility modes of transport.

FIG. 6 is a block diagram of system 600, in accordance with some examples. System 600 is used to implement any of a variety of systems and/or computing devices that include a processor and memory and that are capable of performing the operations described within this disclosure. System 600 can be used to execute computer instructions to implement processes in flowcharts in FIGS. 1 and 2 and the system of FIG. 3.

As pictured, system 600 includes processor 605, coupled to memory elements 610 through a system bus 615 or other suitable circuitry such as an input/output (I/O) subsystem. System 600 stores program code within memory elements 610. Processor 605 executes the program code accessed from memory elements 610 via system bus 615. Memory elements 610 include one or more physical memory devices such as, for example, a local memory 620 and one or more bulk storage devices 626. Local memory 620 refers to random access memory (RAM) or other non-persistent memory devices generally used during actual execution of the program code. Bulk storage device 626 is implemented as a hard disk drive (HDD), solid state drive (SSD), or other persistent data storage device. System 600 also includes one or more cache memories (not shown) that provide temporary storage of at least some program code in order to reduce the number of times program code must be retrieved from bulk storage device 626 during execution.

In some examples, system 600 is coupled to one or more I/O devices such as a screen 636 and one or more I/O devices 640. The I/O devices described herein are coupled to system 600 either directly or through intervening I/O controllers. For example, screen 636 is implemented as a display device that is not touch sensitive. In some examples, screen 636 is implemented as a touch sensitive display device, e.g., a touch screen.

Examples of I/O devices 640 include, but are not limited to, a universal remote control device, a keyboard, a mobile device, a pointing device, a controller, a camera, a speaker, and a microphone. In some examples, one or more of the I/O devices are combined as in the case where a touch sensitive display device (e.g., a touchscreen) is used as screen 636. In that case, screen 636 is also operable as a keyboard and a pointing device. Other examples of I/O devices 640 include sensors. Some examples of sensors include, but are not limited to, an accelerometer, a light sensor, touch screen sensors, one or more biometric sensors, a gyroscope, a compass, or the like.

In some examples, I/O devices 640 include one or more network adapter(s). A network adapter is a communication circuit configured to establish wired and/or wireless communication links with other devices. The communication links are established over a network or as peer-to-peer communication links. Accordingly, network adapters enable system 600 to become coupled to other systems, computer systems, remote printers, and/or remote storage devices, such as remote servers storing content. Examples of network adapter(s) include, but are not limited to, modems, cable modems, Ethernet cards, wireless transceivers, whether short and/or long range wireless transceivers (e.g., cellular transceivers, 802.11x (Wi-Fi™) compatible transceivers, Bluetooth® compatible transceivers, and the like).

As pictured in FIG. 6, memory elements 610 are operable as storage for operating system 666 and one or more applications 660, such as applications for translating symbols and zero-amplitude time durations and symbol mapping tables. In some examples, memory elements 610 also stores software for segmenting or breaking a message (to be transmitted) into pieces or segments that can be represented by symbols. In some examples, operating system 666 and applications 660, being implemented in the form of executable program code, are executed by system 600 and, more particularly, by processor 605. As such, operating system 666 and applications 660 are considered an integrated part of system 600. Operating system 666, applications 660, and any data items used, generated, and/or operated upon by system 600 are functional data structures that impart functionality when employed as part of system 600. The executable program code is stored on a non-transitory computer readable medium.

In some examples, system 600 is used to implement a computer, such as a personal computer, a server, or the like. Other examples of mobile computing devices include, but are not limited to, a tablet computer, a mobile media device, a game console, a mobile internet device (MID), a laptop computer, a mobile appliance device, or the like. System 600 is be configured to read computer instructions or program code from a computer readable medium.

Therefore, it is to be understood that the present disclosure is not to be limited to the specific examples illustrated and that modifications and other examples are intended to be included within the scope of the appended claims. The description and drawings describe examples in the context of illustrative combinations of elements and functions, different combinations of elements and functions can be provided by alternative implementations without departing from the scope of the appended claims. Accordingly, parenthetical reference numerals in the appended claims are presented for illustrative purposes and are not intended to limit the scope of the claimed subject matter to the specific examples provided in the disclosure.

### Further Examples

Further, the disclosure includes examples according to the following clauses:
Clause 1. Method 100 comprising:
   in response to receiving surveillance data 302 relating to airline ground services, sorting 106 , by system 600 comprising processor 605, surveillance data 302 based on an airport, corresponding to airport layout data 304;
   applying 110 parking stand identification logic to surveillance data 302 and airport map data 304 to update parking stand database 318;
   receiving 114 parking stand search parameter input 303 from a user interface, parking stand search parameter input 303 associated with an aircraft; and
   based on analysis of information in parking stand database 318, predicting 116 one or more parking stands available for parking the aircraft at the airport.
Clause 2. Method 100 as recited in clause 1, wherein parking stand database 318 comprises at least one record 400, comprising parking stand prediction field 414.
Clause 3. Method 100 as recited in any one of clauses 1-2, wherein parking stand search parameter input 303 comprises an input data indicative of at least one of an airport of arrival, an airline, or an aircraft type.
Clause 4. Method 100 as recited in any one of clauses 1-3, further comprising comprises identifying 117 a parking stand apron.
Clause 5. Method 100 as recited in any one of clauses 1-4, wherein predicting 118 one or more parking stands for parking the aircraft is performed between receiving 114 parking stand search parameter input 303 and arriving of the aircraft at the airport.
Clause 6. Method 100 as recited in any one of clauses 1-5, further comprising creating 102 parking stand database 318 for the airport.
Clause 7. Method 100 as recited in any one of clauses 1-6, further comprising:
   determining 202 a first group of parking stands of the one or more parking stands for parking the aircraft at the airport;
   predicting 204 a second group of parking stands of the one or more parking stands for parking the aircraft at the airport; and
   facilitating 208 a display of the first group of parking stands and the second group of parking stands, wherein the first group of parking stands is distinguishable from the second group of parking stands.
Clause 8. Method 100 as recited in clause 7,
   wherein the first group of parking stands has a first probability of being available when the aircraft arrived at the airport,
   wherein the second group of parking stands has a second probability of being available when the aircraft arrived at the airport, and
   wherein the first probability is greater than the second probability.
Clause 9. Method 100 as recited in any one of clauses 1-8, further comprising decoding 104 surveillance data 302.
Clause 10. Method 100 as recited in any one of clauses 1-9, wherein the parking stand identification logic further comprises:
   evaluating speed of the aircraft on a way to the airport; and
   designating the aircraft as parked in one of the parking stands at the airport.
Clause 11. Parking stand prediction system 600 comprising:
   one or more processors 605; and
   memory 610 that stores executable instructions that, when executed by one or more processors 605, facilitate performance of operations, comprising:
      sorting 106 surveillance data 302 based on an airport, corresponding to airport layout data 304;
      applying 110 parking stand identification logic to surveillance data 302 and airport map data 304; and
      predicting 116 one or more parking stands available for parking an aircraft at the airport.
Clause 12. Parking stand prediction system 600 as recited in clause 11, wherein the operations further comprise decoding 104 the surveillance data 302.
Clause 13. Parking stand prediction system 600 as recited in any one of clauses 11-12, wherein the memory comprises a parking stand database 318, comprising a parking stand prediction field.
Clause 14. Parking stand prediction system 600 as recited in any one of clauses 11-13, wherein the operations further comprise facilitating 118 a display of the one or more parking stands available for parking an aircraft at the airport.
Clause 15. Parking stand prediction system 600 as recited in any one of clauses 11-14, wherein the operations further comprise receiving 108 and storing airport layout data, wherein the one or more parking stands available for parking an aircraft at the airport is predicted based at least in part on the airport layout data.
Clause 16. A non-transitory computer-readable medium embodying program code, the program code to be executed to implement a method of predicting parking stands for parking an aircraft at an arrival airport, the program code for:
   sorting 106 surveillance data 302 based on an airport, corresponding to airport layout data 304;
   applying 110 parking stand identification logic to the surveillance data 302 and the airport map data 304; and
   predicting 116 one or more parking stands available for parking an aircraft at the airport.
Clause 17. The non-transitory computer-readable medium embodying program code as recited in clause 16, further for decoding 104 the surveillance data 302.
Clause 18. The non-transitory computer-readable medium embodying program code as recited in any one of clauses 16 and 17, further for facilitating 118 a display of the one or more parking stands available for parking an aircraft at the airport.
Clause 19. The non-transitory computer-readable medium embodying program code as recited in any one of clauses 16-18, further for receiving 108 and storing airport layout data, wherein the one or more parking stands available for parking an aircraft at the airport is predicted based at least in part on the airport layout data.
Clause 20. The non-transitory computer-readable medium embodying program code as recited in any one of clauses 16-18, further for creating 102 the parking stand database 318 for the airport.

## Claims

1. A method (100) comprising:
in response to receiving surveillance data (302) relating to airline ground services, sorting (106), by a system (600) comprising a processor (605), the surveillance data (302) based on an airport, corresponding to airport layout data (304);
applying (110) parking stand identification logic to the surveillance data (302) and the airport map data (304) to update a parking stand database (318);
receiving (114) a parking stand search parameter input (303) from a user interface, the parking stand search parameter input (303) associated with an aircraft; and
based on analysis of information in the parking stand database (318), predicting (116) one or more parking stands available for parking the aircraft at the airport.

2. The method (100) as recited in claim 1, wherein the parking stand database (318) comprises at least one record (400), comprising a parking stand prediction field (414).

3. The method (100) as recited in any one of claims 1-2, wherein the parking stand search parameter input (303) comprises an input data indicative of at least one of an airport of arrival, an airline, or an aircraft type.

4. The method (100) as recited in any one of claims 1-3, further comprising comprises identifying (117) a parking stand apron.

5. The method (100) as recited in any one of claims 1-4, wherein predicting (118) one or more parking stands for parking the aircraft is performed between receiving (114) the parking stand search parameter input (303) and arriving of the aircraft at the airport.

6. The method (100) as recited in any one of claims 1-5, further comprising creating (102) the parking stand database (318) for the airport.

7. The method (100) as recited in any one of claims 1-6, further comprising:
determining (202) a first group of parking stands of the one or more parking stands for parking the aircraft at the airport;
predicting (204) a second group of parking stands of the one or more parking stands for parking the aircraft at the airport; and
facilitating (208) a display of the first group of parking stands and the second group of parking stands, wherein the first group of parking stands is distinguishable from the second group of parking stands.

8. The method (100) as recited in claim 7,
wherein the first group of parking stands has a first probability of being available when the aircraft arrived at the airport,
wherein the second group of parking stands has a second probability of being available when the aircraft arrived at the airport, and
wherein the first probability is greater than the second probability.

9. The method (100) as recited in any one of claims 1-8, further comprising decoding (104) the surveillance data (302).

10. The method (100) as recited in any one of claims 1-9, wherein the parking stand identification logic further comprises:
evaluating speed of the aircraft on a way to the airport; and
designating the aircraft as parked in one of the parking stands at the airport.

11. A parking stand prediction system (600) comprising:
one or more processors (605); and
a memory (610) that stores executable instructions that, when executed by the one or more processors (605), facilitate performance of operations, comprising:
sorting (106) surveillance data (302) based on an airport, corresponding to airport layout data (304);
applying (110) parking stand identification logic to the surveillance data (302) and the airport map data (304); and
predicting (116) one or more parking stands available for parking an aircraft at the airport.

12. The parking stand prediction system (600) as recited in claim 11, wherein the operations further comprise decoding (104) the surveillance data (302).

13. The parking stand prediction system (600) as recited in any one of claims 11-12, wherein the memory comprises a parking stand database (318), comprising a parking stand prediction field.

14. The parking stand prediction system (600) as recited in any one of claims 11-13, wherein the operations further comprise facilitating (118) a display of the one or more parking stands available for parking an aircraft at the airport.

15. The parking stand prediction system (600) as recited in any one of claims 11-14, wherein the operations further comprise receiving (108) and storing airport layout data, wherein the one or more parking stands available for parking an aircraft at the airport is predicted based at least in part on the airport layout data.
